# EUROPEAN PATENT SPECIFICATION

(11) **EP 0 891 591 B1**
(45) Date of publication and mention of the grant of the patent: **09.02.2000**
(21) Application number: 97914435.9
(22) Date of filing: 25.03.1997
(51) Int. Cl.: G06F 17/30, H04L 29/06

(54) **AN INTERNET SERVER AND METHOD OF CONTROLLING AN INTERNET SERVER**
EIN INTERNET-SERVER UND EIN VERFAHREN ZUM STEUERN EINES INTERNET-SERVERS
SERVEUR INTERNET ET PROCEDE DE COMMANDE D'UN SERVEUR INTERNET

(30) Priority: 04.04.1996 GB 9607152
(43) Date of publication of application: 20.01.1999
(73) Proprietor: BRITISH TELECOMMUNICATIONS public limited company, London EC1A 7AJ (GB)
(72) Inventor: ANTCLIFF, Stuart, James, Woodbridge, Suffolk IP12 1RQ (GB); REGNAULT, John, Christopher, Woodbridge, Suffolk IP12 4PA (GB); BRADLEY, Laurence, Daniel, Ipswich, Suffolk IP4 5BQ (GB)
(74) Representative: Evershed, Michael
(86) International application number: GB9700835
(87) International publication number: WO9738375

(56) References cited:
- COMPUTER NETWORKS AND ISDN SYSTEMS, vol. 27, no. 6, 1 April 1995, pages 765-771, XP000498084 LEWONTIN S: "The DCE Web toolkit: enhancing WWW protocols with lower-layer services"
- 24TH ANNUAL MEETING OF THE SOCIETY FOR COMPUTERS IN PSYCHOLOGY (SCIP), ST. LOUIS, MO, USA, 10 NOV. 1994, vol. 27, no. 2, ISSN 0743-3808, BEHAVIOR RESEARCH METHODS, INSTRUMENTS, & COMPUTERS, MAY 1995, USA, pages 200-205, XP000567305 CHU J Y M ET AL: "Creating a hypertext markup language document for an information server"
- IEEE NETWORK, MARCH-APRIL 1996, IEEE, USA, vol. 10, no. 2, ISSN 0890-8044, pages 10-17, XP000580078 SCHULZRINNE H: "World Wide Web: whence, whither, what next?"
- PROCEEDINGS OF THE WORKSHOP ON ADVANCED VISUAL INTERFACES AVI 94, PROCEEDINGS OF THE WORKSHOP ON ADVANCED VISUAL INTERFACES AVI, BARI, ITALY, 1-4 JUNE 1994, ISBN 0-89791-733-2, 1994, NEW YORK, NY, USA, ACM, USA, pages 234-236, XP000571293 LEONE A O ET AL: "Towards a user environment integrating hypermedia browsers, scientific visualization programs and numerical simulation programs"
- PROCEEDINGS. WORKSHOP ON MOBILE COMPUTING SYSTEMS AND APPLICATIONS (CAT. NO.94TH06734), WORKSHOP ON MOBILE COMPUTING SYSTEMS AND APPLICATIONS, SANTA CRUZ, CA, USA, 8-9 DEC. 1994, ISBN 0-8186-6345-6, 1995, LOS ALAMITOS, CA, USA, IEEE COMPUT. SOC. PRESS, USA, pages 185-190, XP000602490 VOELKER G M ET AL: "Mobisaic: an information system for a mobile wireless computing environment"

## Description

The present invention relates to an internet server and method of controlling the internet server.

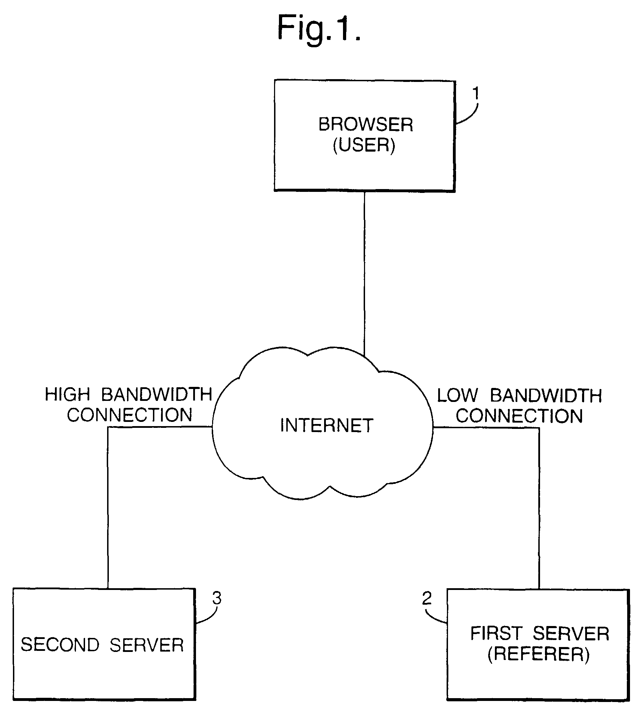

The internet has developed rapidly over the past few years and has resulted in increased traffic over telecommunications networks. One particular factor which has made the internet more 'user friendly' is the development of the World Wide Web (WWW) service which uses the HyperText Transfer Protocol (HTTP) specification. In order to utilise the WWW service, the user will utilize what is termed a browser, which is software which can interpret hypertext mark-up language (HTML) files which are sent from an internet WWW server to create a web page on the screen of the user's computer. Figure 1 illustrates a typical internet configuration wherein a user is connected to the internet and uses the WWW service using a browser 1.

In order to initiate the generation of a web page, i.e. to connect to a WWW server such as first server 2, which has a low storage and processor capacity and is linked to the internet via a low bandwidth connection, a request for an HTML file must be transmitted by the browser 1 to the WWW server 2. In order to identify and locate a file in a server from amongst the servers connected to the internet, the file is identified by a universal resource locator (URL). The URL is structured to identify the protocol (which in this case is HTTP), the internet server, the directory of the file in the internet server and the file name. Thus the URL structure is:
http://internet server/directory/file name

When a URL is selected by a user, the browser 1 transmits a file request over the internet to the first server 2 which has the address identified in the URL of the file requested in a HTML file. The first server 2 will then send the HTML file to the browser 1. The browser 1 then interprets the HTML file in order to generate a web page.

The HTML specification allows for text to be displayed and for hypertext links to be included in the web page. Also, the HTML protocol allows graphics or image files to be included in the web page displayed by the browser 1. The HTML protocol thus allows for image files which are to be displayed by the browser 1 to be identified by their URL. When the browser 1 interprets the HTML file returned from the first server 2, if the HTML file includes image URL's, the browser 1 will seek to retrieve the image files using the URL of the image file. Thus, the image or graphics files are retrieved separately to the HTML file and when a web page is displayed by the browser 1, the graphics included in the web page can take longer to display as the file is retrieved after the HTML file.

Since the image file required to complete the web page is identified by a URL there is no requirement for the image file to be located at the first server 2 which supplied the HTML file. Because image or graphics files can be quite large files, the transmission of such files over the internet can take a significant period of time when transmitted over a route with a relatively limited data rate. The ability of a browser 1 to locate and retrieve image or graphics files which are referred to in the web page and which are located anywhere in the internet, allows an internet server providing web pages to utilize this to avoid having to store image or graphics files required to complete the web page created by the HTML file. Further, such a first server can be connected to the internet over a low bandwidth connection without risking a bottleneck. A second server 3 in the internet which has a high storage and processor capacity which hosts the graphics or image files referred to in the web page is thus the subject of bandwidth-consuming graphic file requests from the browser. Such a second server 3 can for instance be an internet server which is connected to the internet over a high bandwidth connection.

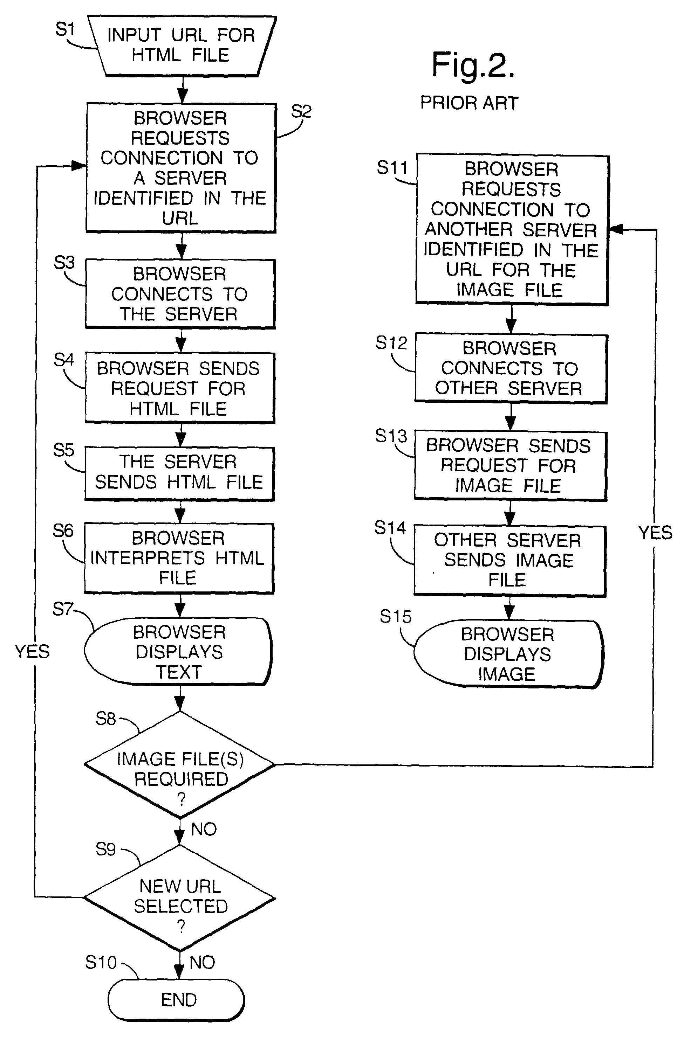

Figure 2 illustrates in more detail a method of operation when such a system of referring to graphics pages at another server is used.

When the browser 1 is initialised, a URL for an HTML file is input or selected by a user in step S1. The browser then requests connection to the server identified in the URL in step S2 and in step S3 the browser connects to the server. The browser then sends a request for the HTML file in step S4 and in step S5 the server sends the HTML file which is then interpreted by the browser in step S6. The web page generated by the interpretation of the HTML file is then displayed in step S7. At this point the web page will include only the text and the hypertext links. In step S8 the browser determines whether the HTML file refers to any image URLs. If not, the browser will await to determine whether any URL is selected for instance using the hypertext links in step S9. If a new URL is selected in step S9 the browser returns to step S2 to request a connection to the same or another server. If no new URL is selected the browser will end requesting files in step S10. If in step S8 it is determined that the HTML file refers to image or graphics URLs, in step S11 the browser requests connection to the second server 3 (or other servers) identified in the URL of the image file. In step S12 the browser connects to the second server 3 (or other servers) and in step S13 the browser 1 sends a request for the image file. The second server 3 then sends the requested image file in step S14 and in step S15 the browser displays the image file within the web page. Step S8 and steps S11 to S15 will be carried out simultaneously to retrieve as many image files as are required, i.e. referred to in the HTML file, in order to complete the web page.

It will be seen from the above that the ability of the HTML protocol to allow an HTML file to refer to image files at any server connected to the internet using the URL, allows the first server 2 to make use of image or graphics files in the second server 3 thus reducing the cost of storage at the first server 2. The first server requires less processing time and less bandwidth to deliver the complete web page to the browser 1. Also, the development of web pages by the operator of the first server 2 is easier and cheaper, since there is no need for the operator to create custom artwork. They are simply able to use images available on other servers.

A tool kit for enhancing WWW protocols, including security, is described in Computer Networks and ISDN Systems, vol. 27, no 6, April 1995, pages 765 - 771; Lewontin S.: "The DCE Web toolkit: enhancing WWW protocols with lower-layer services".

In accordance with one aspect, the present invention provides a method of operating a file server comprising the steps of
receiving a request for a file;
determining if the file request includes an identification signal identifying an originating file from which said file request originated;
comparing any said identification signal with one or more predetermined identification signals; and
deciding which file if any is to be supplied in dependence upon said determining and comparing steps, and if in the deciding step it is decided that a file is to be supplied, supplying said file.

The present invention therefore allows the control of access to image or graphics files, or any other high bandwidth files such as digitized sounds or movies.

The file request may be a hypertext transfer protocol file request from a web browser over the internet and the identification signal may identify a web page from which the file request was made. The file to be transmitted is then transmitted to the web browser of the user.

In a preferred embodiment, the file sent to a user may be customised by a server, thus customising the web page displayed by a user's browser, in dependence upon the route taken in arriving at the web page to be displayed i.e. in dependence upon the previous web page.

In accordance with a second aspect, the present invention provides a file server comprising:
receiving means for receiving a file request;
determining means for determining if the file request includes an identification signal identifying an orginating file from which said file request originated;
comparison means for comparing any said identification signal with one or more predetermined identification signals;
decision means responsive to said determining means and said comparison means for deciding which file if any is to be supplied; and
an output for supplying a file if said decision means decides that a file is to be supplied.

The present inventors have realised that the HTTP protocol provides that the URL of the HTML file which refers to any image or digitised sound file is included as a 'referrer' address when a request for a file is made to an internet server. Also, the address of the web page is included as a referrer address when a further web page is requested i.e. a further HTML file is requested, using the hypertext links in the web page. Thus, when a file request is made to an internet server, most commercial web browsers e.g. Netscape (trade mark) will comply with the HTTP protocol and will transmit the URL for the web page currently being interpreted by the browser. Thus, the referrer address or URL can be used to identify the route taken in requesting the file from the internet server. This allows the possibility of identifying a first server which is trying to incorporate graphics files from a second server. By interrogating the referrer address, a second server is able to control access to the requested files. This enables the second server to prevent the files being sent. Instead a warning message can be sent, warning that access to the file has been denied. The ability of a second server to identify the originating server allows an operator of a second server to require an operator of a first server to subscribe to allow access to files. The details on the access allowed to the originating server can be stored in a second server to allow the second server to determine at what level access should be allowed to what files.

In addition to the possibility of controlling access to image or sound, or other high bandwidth files, the referrer details transmitted with the file request may inform the server of the web page from which a file request is being made. Thus, if a HTML file is requested from a web page, the server is able to identify from which web page the HTML file request is made and customise the HTML file accordingly. For instance, if the browser requests a HTML file and generates a web page which includes details of a company, the details which are to be displayed can be tailored in dependence upon the current web page being displayed by the browser which could for instance be financial information. The HTML file then transmitted to the browser could be selected from amongst a library of HTML files or specifically generated or tailored to suit the originating web page.

Embodiments of the present invention will now be described by way of example only with reference to the accompanying drawings in which:-
Figure 1 is a schematic drawing of the interconnection of a browser with servers over the internet;
Figure 2 is a flow diagram illustrating the operation of the browser and the servers in accordance with the prior art;
Figure 3 is a flow diagram illustrating the operation of the browser and servers according to one method of the present invention;
Figure 4 is a flow diagram illustrating in more detail the operation of the browser and the servers over the internet in accordance with a first embodiment of the present invention;
Figure 5 is a flow diagram illustrating the operation of the browser and the servers over the internet in accordance with a second embodiment of the present invention;
Figure 6 is a flow diagram illustrating a further method of operating the browser and servers over the internet in accordance with a third embodiment of the present invention; and
Figure 7 shows a function block diagram of an internet server according to one embodiment of the invention.

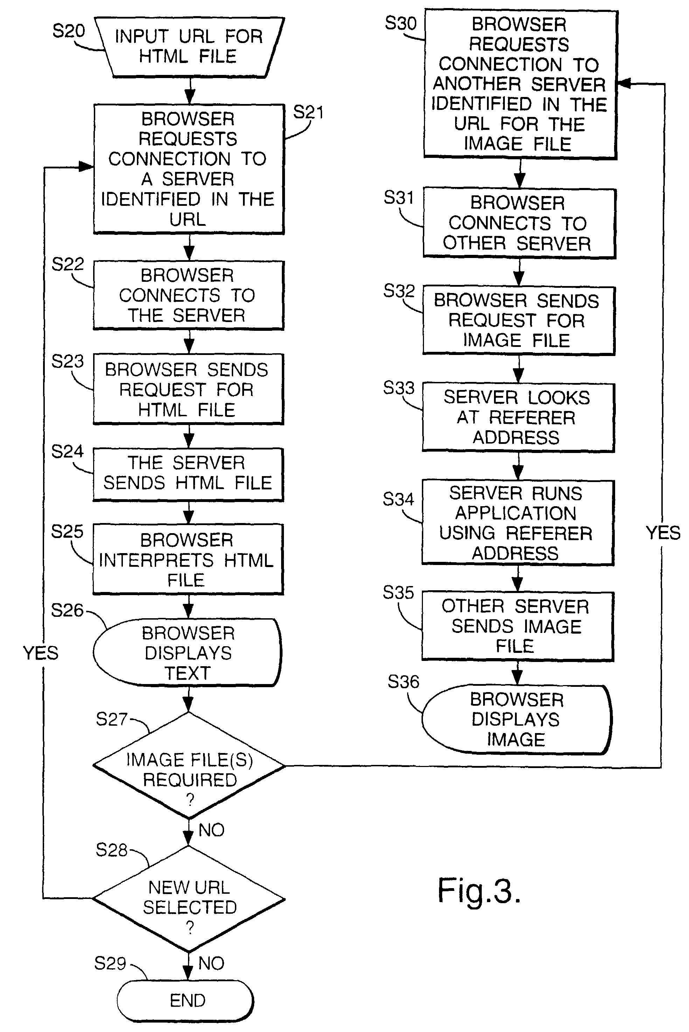

Figure 3 illustrates one general method in accordance with the present invention. In step S20 a URL for a HTML file is input or selected by a user from the browser. The browser then requests connection to a server identified in the URL in step S21 and in step S22 the browser connects to the server. The browser then sends a request for the HTML file in step S23 and the server sends the HTML file in step S24. The browser then interprets the HTML file in step S25 and displays the web page in step S26. At this point the web page will include only the text and hypertext links. In step S27 it is then determined whether the HTML file refers to any URL's for image files or sound files in step S27. If no files are referred to by the HTML file i.e the web page contains purely text, the browser will determine whether there is a new URL selected in step S28 either manually or via a hypertext link. If a new URL is selected the browser returns to step S21 to request connection to a server. If no new URL is selected the browser will end requesting files in step S29.

If in step S27 it is determined that the HTML file refers to a URL for one or more image files, in step S30 the browser requests connection to another server or servers identified in the URL for the image file. The browser then connects to the other server (or servers) in step S31 and in step S32 the browser sends a request for the image file. In the HTTP protocol, the request for a file includes referrer details which is the URL of the HTML file from which the request originated. In step S33 the server looks at this referrer address and decides what file to send to the browser using the referrer address in step S34. Once the server has decided what file to send to the browser in step S35 the server sends the image file which is then displayed in the web page by the browser in step S36. Steps S27 and S30 to S36 are carried out with one or more servers to acquire all of the image files necessary in order to complete the web page.

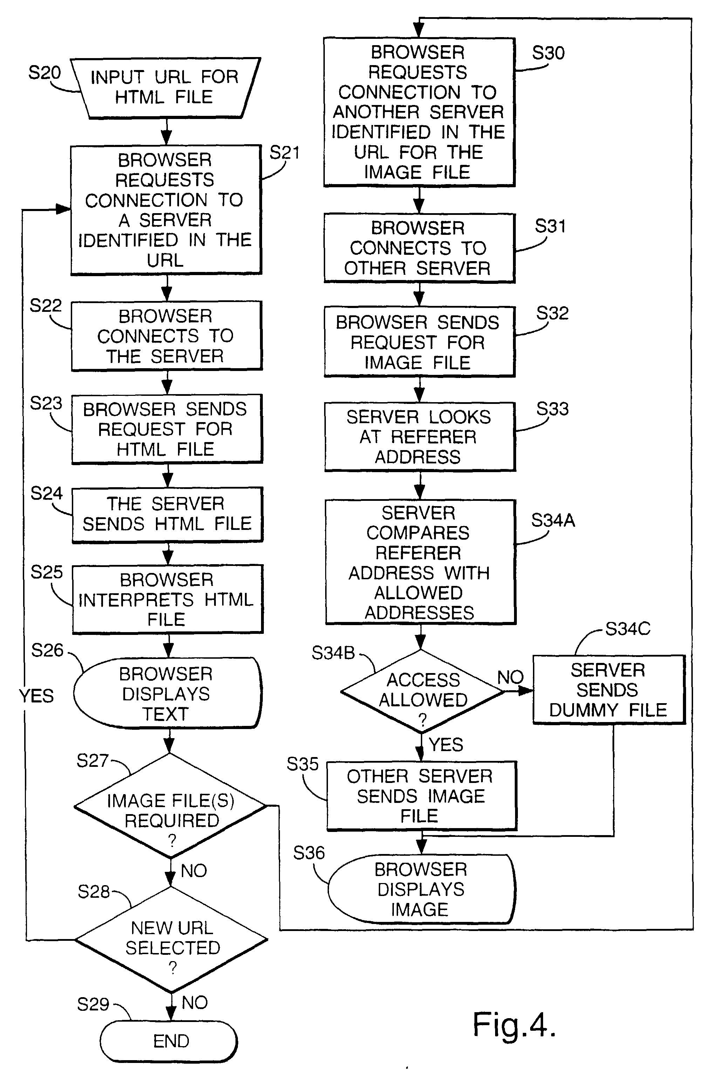

Thus in this method a web page refers to image files in another server for completing the web page displayed by the browser. Since the HTTP protocol provides for the transmission of the URL of the HTML file currently being interpreted by the browser, the server which receives the request for the image file can determine the origin of the request i.e. which is the originating server, and can thus decide whether access to the image file is allowed. This is shown in more detail in Figure 4 where like steps are given like reference numerals. In Figure 4 step S34 is shown in more detail by steps S34A, S34B and S34C. In step S34A the server compares the referrer address with the allowed addresses i.e. the server stores a table of server addresses identifying the files which the servers are allowed access to. In step S34B it is determined whether access is allowed or not. If access is allowed in step S35 the server sends the requested image file. If however in step S34B it is determined that access is not allowed, then the server will send a dummy file for display by the web page in step S34C. Such a dummy file can include a warning that access to the requested image file has not been allowed. Alternatively, if the file is a sound file, instead of the requested digitized sound, a sound file transmitted could include a simple audio warning or statement that access to the requested file has been denied. A benefit of transmitting a dummy file instead of the requested file is that the size of the dummy file can be considerably smaller than the size of the requested file e.g. 1 Kbyte as opposed to 10's to 100's of Kbytes. This provides a bandwidth saving for the server.

In this way, a server is able to control access to its files over the internet. If a server is accessed directly e.g. by typing in a URL, then there will be no referrer address sent. In this case, the server can recognise that no referrer address has been sent and allow a predetermined level of access to files. For instance, a URL which has been directly entered could be a URL for an image file i.e. the user is attempting to directly down load an image file from the server. It can thus be predetermined whether such direct access is allowed by setting the level of access to files for file requests which do not have a referrer address associated with them.

The ability of a server containing image files, which can either be directly accessed or referred to by other servers, to identify the origin of the request for a file allows the server to provide a subscription service for access to files. The server can i be segregated into areas that provide images for any subscriber, one particular subscriber only, subscribers paying for enhanced package, or anyone i.e. a free service. This control will also be beneficial to server owners who refer to other servers for files since owners of the servers containing the files would be encouraged to develop the library of files available to subscribers. Not all server ) owners would therefore need to generate their own library but can simply subscribe to the servers containing the desired files thereby gaining access to a large range of images, movies and sounds etc which can be incorporated into their web pages. This system also provides a platform for providing copyright protected images and sounds allowing authors or artists payment for their work. Further, the distribution of services over the internet in this manner allows for the efficient use of the internet since the server providing the files to a referrer can be connected to the internet over a high bandwidth connection thus allowing other servers to be connected over low bandwidth connections. This makes efficient use of internet connections and avoids bottlenecks.

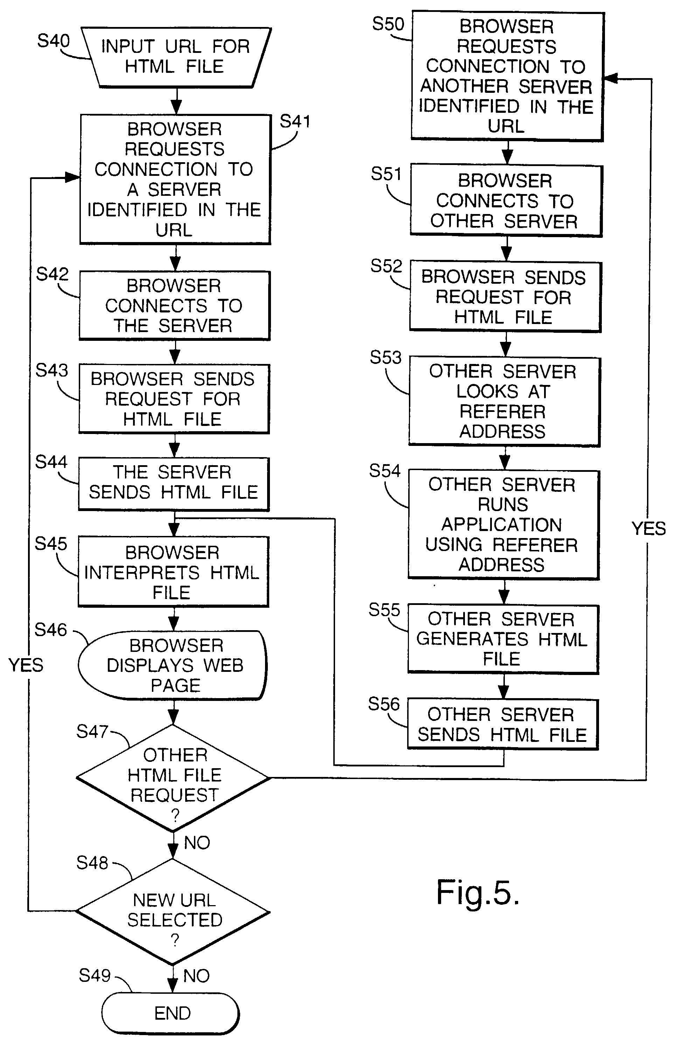

Referring now to Figure 5, a second method is illustrated allowing the customisation of web pages depending on the route by which the web page is arrived at.

In Figure 5 in step S40 the URL for the HTML file is input or selected by the user via the browser. The browser then requests connection to a server identified in the URL in step S41 and the browser connects to the server in step S42. The browser sends a request for the HTML file in step S43 and the server sends the HTML file in step S44. The browser then interprets the HTML file in step S45 and in step S46 the browser displays the web page. The web page displayed in step S46 will include text and hypertext links. Also, images can be included in the web page and can be retrieved from a server in a manner described hereinabove with reference to either the prior art Figure 2, or Figures 3 or 4.

In step S47 it is determined whether another HTML file is requested by a user who has selected a hypertext link in the web page. If another HTML file is requested, the HTML file has a URL and in step S50 the browser requests connection to another server identified in the URL. The browser then connects to the other server in step S51 and in step S52 the browser sends a request for the HTML file. The server then looks at the referrer address which refers to the URL of the HTML file which is currently being displayed by the web page (step S46) and the server runs an application using the referrer address in step S54 and in step S55 the server generates a HTML file which is then sent in step S56 to the browser. The browser can then interpret the HTML file in step S45 and display a new web page in step S46.

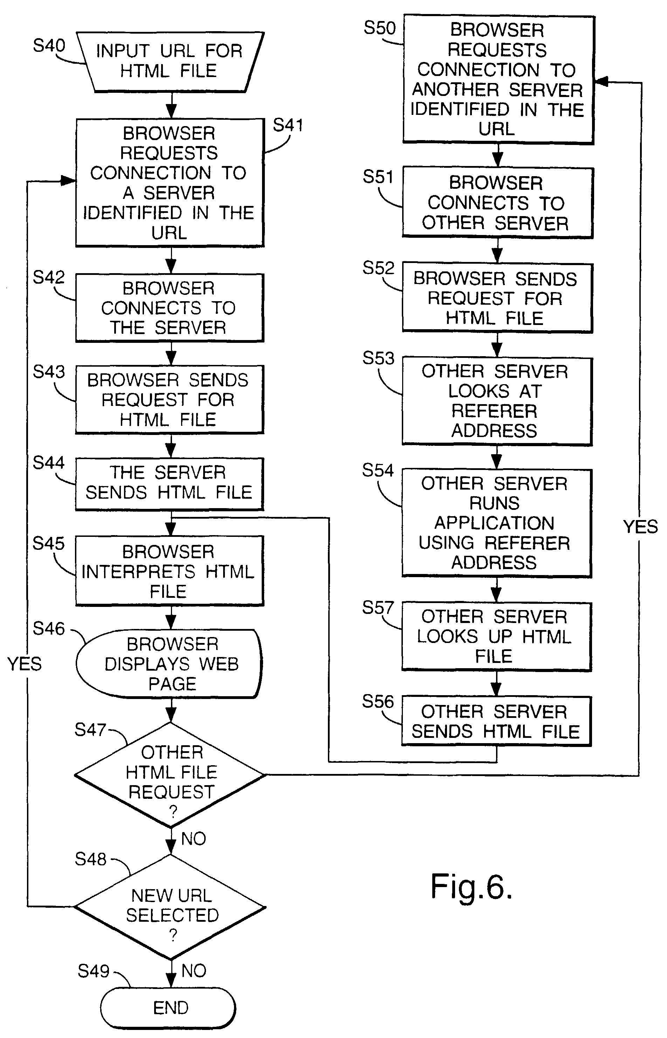

In this method, since the server refers to the referrer address to determine which application to run, the HTML file sent to the browser can be customised in dependence upon the web page from which the request for a new web page was made. In this embodiment the server runs an application which takes in the referrer address and generates a new HTML file. However, an alternative method of sending a customised HTML file to the browser is illustrated in Figure 6.

In Figure 6 like reference numerals are used for the steps which are the same as those in Figure 5. This method differs from Figure 5 in that step S55 i.e. the generation of an HTML file is replaced with a step S57 of looking up an appropriate HTML file from a library of stored HTML files for referrer addresses.

Thus, the methods of Figures 5 and 6 allow a server to customise the web page displayed at a browser in dependence upon the previous web page. This would give the server an appearance of having some 'intelligence'.

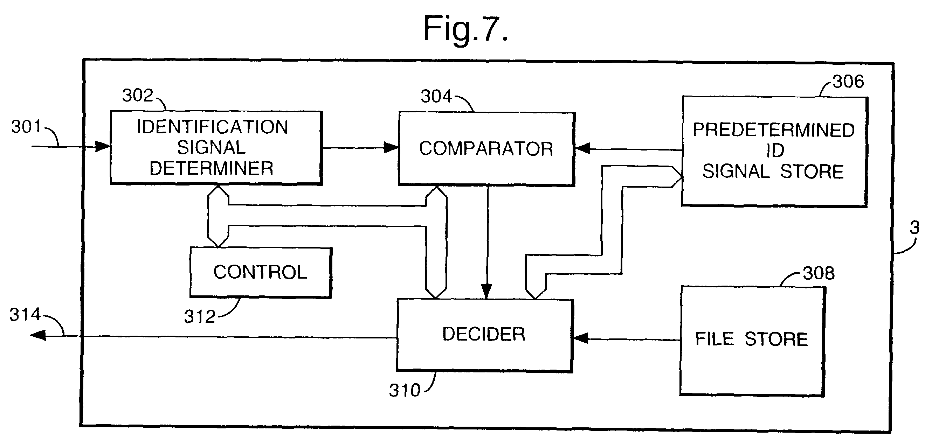

Figure 7 shows an internet server 3 according to the invention. The internet server 3 has an input 301 for receiving via the internet a file request from a user, for instance by means of a browser 1. The file request is passed to an identification signal determiner 302 which determines if the file request includes an identification signal identifying the origin of the file request. For instance, if the file request conforms to the hypertext transfer protocol, the file request may include the URL of the page being displayed on the user's screen. This URL is the identification signal determined by the unit 302.

A comparator 304 then compares the identified identification signal in the input file request with predetermined identification signals stored in a store 306. Whether or not there is a match will determine which file stored in the file store 308 is transmitted to the user. The comparator 304 and the decision means 310 are controlled by a control unit 312. The comparator 301 informs the decision means 310 of the result of the comparison. The decision means 310 then interrogates the store 306 to determine to which files access is allowed. If access to the requested file is allowed, the file is retrieved from the file store 308 and then transmitted to the user via an output 314 and the internet. The control of the decision means 310 has been described at length with reference to Figures 3 to 6.

The functional elements of the internet server may be implemented in hardware or software or a combination of both.

Although the present invention has been described with reference to specific embodiments, the present invention is not so limited and modifications which are clear to a skilled person in the art can be made without departing from the scope of the invention as defined in the claims. In particular, the term "internet" is used generically and refers not only to an international interconnected network of computers and servers but also to other interconnected networks, for instance so-called intranets - interconnected networks internal to an organisation. Furthermore, the term "web" is not intended to limit implementation of the invention to WWW applications. The invention may also be applicable to FTP (File Transfer Protocol) and Telnet applications and other such future applications. This list is not intended to be exhaustive.

## Claims

1. A method of operating a file server comprising the steps of
receiving a request for a file;
determining if the file request includes an identification signal identifying an originating file from which said file request originated;
comparing any said identification signal with one or more predetermined identification signals; and
deciding which file if any is to be supplied in dependence upon said determining and comparing steps, and if in the deciding step it is decided that a file is to be supplied, supplying said file.

2. A method as claimed in claim 1 wherein said supplied file is supplied only if any said identification signal matches a said predetermined identification signal.

3. A method as claimed in claim 1 or claim 2 wherein said file supplied is said file requested.

4. A method as claimed in any one of claims 1 to 3 wherein if any said identification signal does not match a said predetermined identification signal, said file supplied is a dummy file.

5. A method as claimed in one of claims 1 to 4 wherein a look-up table contains said one or more predetermined identification signals and identifies one or more files which can be supplied in accordance with the or each predetermined identification signal.

6. A method as claimed in claim 1 wherein said deciding step further comprises generating a file for supply.

7. A method as claimed in one of claims 1 to 6 wherein said file request conforms to the hypertext transfer protocol.

8. A method as claimed in claim 7 wherein any said identification signal comprises the universal resource location address for said originating file from which the file request originated.

9. A method as claimed in any one of claims 1 to 8 in which said file server is connected to the internet and wherein said file request is received via the internet.

10. A file server comprising
receiving means for receiving a file request;
determining means for determining if the file request includes an identification signal identifying an orginating file from which said file request originated;
comparison means for comparing any said identification signal with one or more predetermined identification signals;
decision means responsive to said determining means and said comparison means for deciding which file if any is to be supplied; and
an output for supplying a file if said decision means decides that a file is to be supplied.

11. A file server as claimed in claim 10 wherein said decision means is adapted to decide that a file is to be supplied only if any said identification signal matches a said predetermined identification signal.

12. A file server as claimed in claim 10 or claim 11 wherein said decision means is adapted to decide that the file requested is to be supplied if any said identification signal matches a said predetermined identification signal.

13. A file server as claimed in any one of claims 10 to 12 wherein if any said identification signal does not match a said predetermined identification signal, a dummy file is supplied.

14. A file server as claimed in any one of claims 10 to 13 further comprising storage means for storing a look-up table containing said one or more predetermined identification signals, said look-up table identifying one or more files which can be supplied in accordance with the or each predetermined identification signal.

15. A file server as claimed in claim 10 wherein said deciding means further comprises generating means for generating a file for supply.

16. A file server as claimed in any one of claims 10 to 15 wherein the receiving means is adapted to receive file requests conforming to the hypertext transfer protocol.

17. A file server as claimed in any of claim 16 wherein said identification signal and said predetermined identification signal comprise the universal resource address location for said originating file from which said file request originated.

18. A file server as claimed in any one of claims 10 to 17 in which said file server is connected to the internet and wherein said receiving means is adapted to receive said file request via the internet.

## Patentansprüche

1. Verfahren zum Betrieb eines Datei-Servers, das die folgenden Schritte umfaßt:
- Empfang eines Aufrufs für eine Datei,
- Bestimmung, ob der Dateiaufruf ein Identifikationssignal enhält, das eine Stammdatei kennzeichnet, von der der Dateiaufruf stammt,
- Vergleich jedes Identifikationssignals mit einem oder mehreren vorgegebenen Identifikationssignalen und
- Entscheidung, welche Datei, falls vorhanden, in Abhängigkeit von der Bestimmung und den Vergleichsschritten zu senden ist, und, wenn im Entscheidungsschritt entschieden wurde, daß eine Datei zu senden ist, Senden dieser Datei.

2. Verfahren nach Anspruch 1, bei dem die genannte Datei nur gesendet wird, wenn jedes Identifikationssignal mit einem vorgegebenen Identifikationssignal übereinstimmt.

3. Verfahren nach Anspruch 1 oder 2, bei dem die gesendete Datei die aufgerufene Datei ist.

4. Verfahren nach einem der Ansprüche 1 bis 3, bei dem, wenn ein Identifikationssignal nicht mit einem vorgegebenen Identifikationssignal übereinstimmt, die gesendete Datei eine Leerdatei ist.

5. Verfahren nach einem der Ansprüche 1 bis 4, bei dem eine Verweistabelle eines oder mehrere vorgegebene Identifikationssignale enthält und eine oder mehrere Dateien, die in Abhängigkeit von dem oder von jedem vorgegebenen Identifikationssignal gesendet werden könnnen, identifiziert.

6. Verfahren nach Anspruch 1, bei dem der Entscheidungsschritt ferner die Erzeugung einer Datei zum Senden umfaßt.

7. Verfahren nach einem der Ansprüche 1 bis 6, bei dem der Dateiaufruf mit dem Hypertext-Transferprotokoll übereinstimmt.

8. Verfahren nach Anspruch 7, bei dem jedes Identifikationssignal die Universalquellen-Standortadresse für die Stammdatei umfaßt, von der der Dateiaufruf stammt.

9. Verfahren nach einem der Ansprüche 1 bis 8, bei dem der Datei-Server mit dem Internet verbunden ist und der Dateiaufruf über das Internet erhalten wird.

10. Datei-Server, der umfaßt:
- Empfangseinrichtung zum Empfang eines Dateiaufrufs,
- Bestimmungseinrichtung zur Bestimmung, ob der Dateiaufruf ein Identifikationssignal enhält, das eine Stammdatei kennzeichnet, von der der Dateiaufruf stammt,
- Vergleichseinrichtung zum Vergleich jedes Identifikationssignals mit einem oder mehreren vorgegebenen Identifikationssignalen und
- Entscheidungseinrichtung, die auf die Bestimmungseinrichtung und die Vergleichseinrichtung anspricht, zur Entscheidung, welche Datei, falls vorhanden, zu senden ist, und
- Ausgang zum Senden einer Datei, wenn die Entscheidungseinrichtung entscheidet, daß eine Datei zu senden ist.

11. Datei-Server nach Anspruch 10, bei dem die Entscheidungseinrichtung so ausgelegt ist, daß sie entscheidet, daß eine Datei nur dann zu senden ist, wenn ein Identifikationssignal mit einem vorgegebenen Identifikationssignal übereinstimmt.

12. Datei-Server nach Anspruch 10 oder 11, bei dem die Entscheidungseinrichtung so ausgelegt ist, daß sie entscheidet, daß die aufgerufene Datei zu senden ist, wenn ein Identifikationssignal mit einem vorgegebenen Identifikationssignal übereinstimmt.

13. Datei-Server nach einem der Ansprüche 10 bis 12, bei dem, wenn ein Identifikationssignal nicht mit einem vorgegebenen Identifikationssignal übereinstimmt, eine Leerdatei gesendet wird.

14. Datei-Server nach einem der Ansprüche 10 bis 13, der ferner eine Speichereinrichtung zur Speicherung einer Verweistabelle umfaßt, die eines oder mehrere vorgegebene Identifikationssignale enthält, wobei die Verweistabelle eine oder mehrere Dateien identifiziert, die in Abhängigkeit von dem oder jedem vorgegebenen Identifikationssignal gesendet werden könnnen.

15. Datei-Server nach Anspruch 10, bei dem die Entscheidungseinrichtung ferner eine Erzeugungseinrichtung zur Erzeugung einer Datei zum Senden enthält.

16. Datei-Server nach einem der Ansprüche 10 bis 15, bei dem die Empfangseinrichtung so ausgelegt ist, daß sie Dateiaufrufe empfängt, die mit dem Hypertext-Transferprotokoll übereinstimmen.

17. Datei-Server nach einem der Ansprüche 10 bis 16, bei dem das Identifikationssignal und das vorgegebene Identifikationssignal den Universalquellen-Adressenstandort für die Stammdatei enthalten, von dem der Dateiaufruf stammt.

18. Datei-Server nach einem der Ansprüche 10 bis 17, wobei der Datei-Server mit dem Internet verbunden ist und die Empfangseinrichtung so ausgelegt ist, daß sie den Dateiaufruf über das Internet empfängt.

## Revendications

1. Procédé de mise en oeuvre d'un serveur de fichiers comprenant les étapes consistant à :
recevoir une demande de fichier,
déterminer si la demande de fichier comprend un signal d'identification identifiant un fichier d'origine dont ladite demande de fichier est originaire,
comparer un dit signal d'identification quelconque à un ou plusieurs signaux d'identification prédéterminés, et
décider quel fichier, le cas échéant, doit être fourni suivant lesdites étapes de détermination et de comparaison, et si dans l'étape de décision il est décidé qu'un fichier doit être fourni, fournir ledit fichier.

2. Procédé selon la revendication 1, dans lequel ledit fichier fourni n'est fourni que si un dit signal d'identification quelconque correspond à un dit signal d'identification prédéterminé.

3. Procédé selon la revendication 1 ou la revendication 2, dans lequel ledit fichier fourni est ledit fichier demandé.

4. Procédé selon l'une quelconque des revendications 1 à 3, dans lequel, si un dit signal d'identification quelconque ne correspond pas à un dit signal d'identification prédéterminé, ledit fichier fourni est un fichier factice.

5. Procédé selon l'une des revendications 1 à 4, dans lequel une table de consultation contient lesdits un ou plusieurs signaux d'identification prédéterminés et identifie un ou plusieurs fichiers qui peuvent être fournis conformément au signal ou à chaque signal d'identification prédéterminé.

6. Procédé selon la revendication 1, dans lequel ladite étape de décision comprend en outre la génération d'un fichier à fournir.

7. Procédé selon l'une des revendications 1 à 6, dans lequel ladite demande de fichier se conforme au protocole de transfert hypertexte.

8. Procédé selon la revendication 7, dans lequel un dit signal d'identification quelconque comprend une adresse de localisation de ressource universelle pour ledit fichier d'origine dont la demande de fichier est originaire.

9. Procédé selon l'une quelconque des revendications 1 à 8, dans lequel ledit serveur de fichiers est relié au réseau Internet et dans lequel ladite demande de fichier est reçue par l'intermédiaire du réseau Internet.

10. Serveur de fichiers comprenant :
un moyen de réception destiné à recevoir une demande de fichier,
un moyen de détermination destiné à déterminer si la demande de fichier comprend un signal d'identification identifiant un fichier d'origine dont ladite demande de fichier est originaire,
un moyen de comparaison destiné à comparer un dit signal d'identification quelconque à un ou plusieurs signaux d'identification prédéterminés, et
un moyen de décision répondant audit moyen de détermination et audit moyen de comparaison afin de décider quel fichier, le cas échéant, doit être fourni, et
une sortie destinée à fournir un fichier si ledit moyen de décision décide qu'un fichier doit être fourni.

11. Serveur de fichiers selon la revendication 10, dans lequel ledit moyen de décision est conçu pour décider qu'un fichier doit être fourni uniquement si un dit signal d'identification quelconque correspond à un dit signal d'identification prédéterminé.

12. Serveur de fichiers selon la revendication 10 ou la revendication 11, dans lequel ledit moyen de décision est conçu pour décider que le fichier demandé doit être fourni si un dit signal d'identification quelconque correspond à un dit signal d'identification prédéterminé.

13. Serveur de fichiers selon l'une quelconque des revendications 10 à 12, dans lequel si un dit signal d'identification quelconque ne correspond pas à un dit signal d'identification prédéterminé, un fichier factice est fourni.

14. Serveur de fichiers selon l'une quelconque des revendications 10 à 13 comprenant en outre un moyen de mémorisation destiné à mémoriser une table de consultation contenant lesdits un ou plusieurs signaux d'identification prédéterminés, ladite table de consultation identifiant un ou plusieurs fichiers qui peuvent être fournis conformément au signal ou à chaque signal d'identification prédéterminé.

15. Serveur de fichiers selon la revendication 10, dans lequel ledit moyen de décision comprend en outre un moyen de génération destiné à générer un fichier en vue de sa fourniture.

16. Serveur de fichiers selon l'une quelconque des revendications 10 à 15, dans lequel le moyen de réception est conçu pour recevoir des demandes de fichier se conformant au protocole de transfert hypertexte.

17. Serveur de fichiers selon l'une quelconque des revendications 10 à 16, dans lequel ledit signal d'identification et ledit signal d'identification prédéterminés comprennent la localisation d'adresse de ressource universelle pour ledit fichier d'origine dont ladite demande de fichier est originaire.

18. Serveur de fichiers selon l'une quelconque des revendications 10 à 17, dans lequel ledit serveur de fichiers est relié au réseau internet et dans lequel ledit moyen de réception est conçu pour recevoir ladite demande de fichier par l'intermédiaire du réseau Internet.
